# EUROPÄISCHE PATENTSCHRIFT

(11) **EP 2 160 345 B1**
(45) Veröffentlichungstag und Bekanntmachung des Hinweises auf die Patenterteilung: **28.09.2011**
(21) Anmeldenummer: 08758162.5
(22) Anmeldetag: 05.06.2008
(51) Int. Cl.: B65G 65/42, B65G 53/44, B65G 15/44, B22C 5/18

(54) **BANDFÖRDERVORRICHTUNG**
BELT CONVEYOR DEVICE
TRANSPORTEUR À COURROIE

(30) Priorität: 11.06.2007 DE 102007027376
(43) Veröffentlichungstag der Anmeldung: 10.03.2010
(73) Patentinhaber: Webac Gesellschaft Für Maschinenbau Mbh, 53879 Euskirchen (DE)
(72) Erfinder: RIXEN, Jürgen, 53881 Euskirchen (DE)
(74) Vertreter: Sparing, Rolf Klaus
(86) Internationale Anmeldenummer: PCT/DE2008/000933
(87) Internationale Veröffentlichungsnummer: WO 2008/151604

(56) Entgegenhaltungen:
- WO-A-2005/105288
- DE-A1- 2 041 216
- DE-C- 599 885
- DE-C1- 19 925 720
- DE-U1- 29 805 219
- US-A- 4 511 302
- US-A- 4 630 988

## Beschreibung

Die Erfindung betrifft eine Bandfördervorrichtung zum Austragen von Schüttgut aus einem Schüttgutbehälter nach dem Oberbegriff des Anspruchs 1, entsprechend z.B der DE 298 05 219.

Ein großer Teil aller industriell verwendeter und verarbeiteter fester Stoffe liegt in Form von Schüttgütern vor, besteht also aus einer Vielzahl relativ kleiner Einheiten, die gemeinsam fließ-, schütt- oder rieselfähig sind. Die Lagerung solcher Schüttgüter erfolgt üblicherweise in Schüttgutbehältern, insbesondere Silos und Bunkern. Problematisch ist dabei häufig, ein eingelagertes Schüttgut aus solchen Schüttgutbehälter vollständig zu entleeren, da es zu Anhaftungen oder Brückenbildungen von Schüttgut innerhalb des Schüttgutbehälters kommt. Dies ist insbesondere problematisch, wenn der Schüttgutbehälter zwischen den Befüllungsvorgängen nicht vollständig entleert wird, da in diesem Fall häufig ältere, nicht mehr fließfähige Schüttgutanteile für sehr lange Zeiträume in dem Schüttgutbehälter verbleiben, obwohl regelmäßig Mengen Schüttgut aus dem Schüttgutbehälter entnommen oder in diesen eingebracht werden.

Das beschriebene Problem ist insbesondere im Bereich der Gießereien bekannt, in denen Formsand, welcher zur Bildung der mit geschmolzenem Material zu befüllenden Formen verwendet wird, nach dem Gießprozeß für eine Wiederverwendung in sogenannten Altsandbunkern gelagert wird. Bedingt durch den Prozessablauf in Gießereien sind die Altsandbunker immer nahezu vollständig gefüllt, wobei der gebrauchte Formsand nach dem Gießprozess an einer oberen Öffnung der Altsandbunker eingefüllt wird und nach einer definierten Verweildauer innerhalb des Altsandbunkers, die der Erholung des Formsandes dient, an einer unteren Öffnung des Altsandbunkers wieder entnommen wird, um in einem weiteren Prozessschritt im sogenannten Sandmischer mit weiteren Hilfsstoffen für einen neuen Gießprozess vorbereitet zu werden. Bei diesem Verfahren ist es notwendig, eine vorgegebene Verweildauer des Formsands in dem Altsandbunker, die sogenannte Maukzeit, möglichst genau einzuhalten, damit der Formsand in dem folgenden Gießprozess die notwendigen Eigenschaften aufweist. Eine homogene Entleerung des Altsandbunkers ist daher unabdingbar, um unterschiedliche Maukzeiten verschiedener Anteile des Formsands zu vermeiden. In der Praxis wird das Ziel einer homogenen Bunkerentleerung jedoch nicht erreicht, da es innerhalb der während des gesamten Prozesses fast vollständig gefüllten Altsandbunker häufig zu erheblichen Verklumpungen von Formsand kommt, wodurch ein hoher Anteil des Formsands nicht mehr fließfähig ist und für lange Zeit in den Altsandbunkern verbleibt. Dies reduziert die in Umlauf befindliche Sandmenge erheblich, wodurch die notwendigen Erholungszeiten des Formsandes nicht eingehalten werden können und weitere Probleme, etwa eine unzulässig erhöhte Sandtemperatur, entstehen. Ausserdem kommt es immer wieder zu Ablösungen von dem verklumpten Formsand, wodurch die Homogenität der im Umlauf befindlichen Sandmenge zerstört wird, was zu erheblichen Problemen im Gießprozess führt.

Aus der Praxis sind Bandfördervorrichtungen zum Austragen von Formsand aus Altsandbunkern bekannt, bei denen unterhalb einer unteren Öffnung des Altsandbunkers ein endlos umlaufendes, an seiner Oberfläche im wesentlichen glattes Transportband angeordnet ist. Das Transportband ist von seitlichen Begrenzungen umgeben, die ein unbeabsichtigtes Austreten des Formsands aus dem Bereich des Transportbands verhindern. Unterhalb der Öffnung des Altsandbunkers liegt der Formsand auf dem Transportband auf und wird durch die Bewegung des Transportbandes aus dem Altsandbunker durch eine von den seitlichen Begrenzungen gebildete Austrittsöffnung ausgetragen. Die Größe der Austrittsöffnung kann über einen einstellbaren Schieber verändert und somit die Fördermenge eingestellt werden. Nachteilig an dieser Art von Bandfördervorrichtung ist, dass der ausgetragene Formsand im wesentlichen nahe der seitlichen Austrittsöffnung aus dem Altsandbunker entnommen wird, wobei der entnommene Formsand durch von oben nachrutschenden Formsand ersetzt wird. In den Bereichen des Transportbands, die weiter von der Austrittsöffnung entfernt sind, steht der Formsand zwar mit dem Transportband im reibenden Kontakt, kann jedoch durch die Wechselwirkung mit dem umgebenden Formsand nicht ausgetragen werden. Dies führt zu einer inhomogenen Entleerung des Altsandbunkers, bei der im wesentlichen nur der Formsand oberhalb der Austragungsöffnung bewegt wird. Mit der Zeit stellen sich innerhalb des Altsandbunkers zwei unterschiedliche Bereiche ein: Ein unterer Bereich, der ausgehend von der Austrittsöffnung in einer Richtung entgegen der Bewegungsrichtung des Transportbands eine kontinuierlich anwachsende Höhe aufweist und in dem der Formsand unbewegt über lange Zeiträume verbleibt, und ein oberer Bereich, der im Vergleich zu dem unteren Bereich eine relativ geringe Menge Schüttgut umfasst, welches während des Austragungsprozesses bewegt bleibt und auf dem unteren, unbeweglichen Bereich in Richtung der Austrittsöffnung abrutscht. Diese erhebliche Reduktion der an dem Umlaufprozess teilnehmenden Sandmenge führt wie beschrieben zu Problemen in dem anschließenden Gießprozess.

DE 199 24 720 C1 beschreibt ein Verfahren zur Aufbereitung von Gießereiformsand, bei dem Altsand nach einem Gießprozess durch Zwischenlagerung, Beimischung von Neusand und Beimischung von Zuschlagsstoffen so konditioniert wird, dass der aufbereitete Formsand anschließend zu neuen Formen verarbeitbar ist. In dem Verfahren wird Altsand chargenweise zunächst durch Zugabe von Wasser bei im wesentlichen gleichzeitigem Mischen, Zuführen von Frischluft und Absaugen von Altluft gekühlt, anschließend nach Abschaltung der Altluftabsaugung durch Mischen mit zugegebenen Zuschlagsstoffen verbunden und schließlich zum Mauken in einem Altsandbunker gelagert.

DE 1 955 088 zeigt eine Vorrichtung zum Austragen von Formsand aus einem Sandbunker mit einer als Kettenkratzförderer ausgebildeten Fördervorrichtung. Am Boden des Sandbunkers ist eine lang gezogene, dachartige Abdeckung angeordnet, deren Seitenwände bis zum Boden des Sandbunkers reichen und die ein über der Abdeckung liegendes, mit Formsand gefülltes Volumen des Sandbunkers von einem unterhalb der Abdeckung befindlichen Volumen trennt, in dem der Kettenkratzförderer angeordnet ist. In den Seitenwänden sind Öffnungen vorgesehen, durch welche Formsand in das untere Volumen eindringen kann. Der unterhalb der Abdeckung angeordnete Kettenkratzförderer weist einen unendlich umlaufenden Kettenstrang mit daran angeordneten Kratzern auf. Die am Boden des Sandbunkers entlanglaufenden Kratzer greifen in den unter die Abdeckung gelangten Formsand ein und schieben den Formsand über den Boden des Sandbunkers in Richtung einer seitlichen Austrittsöffnung aus dem Sandbunkervolumen. Nachteilig an dieser Anordnung ist, dass die gesamte Fördervorrichtung unter dem Formsand verschüttet und somit für Wartungs- oder Reparaturarbeiten nicht zugänglich ist. Ferner ist nachteilig, dass die Förderung des Formsands unmittelbar auf dem Boden des Sandbunkers und vollständig innerhalb des Sandbunkers erfolgt, so dass die Weitergabe des Formsands an eine weitere Fördervorrichtung nur umständlich möglich ist. Weiter ist nachteilig, dass durch Brückenbildung oberhalb der in der Abdeckung vorgesehenen Öffnungen die Förderung des Formsands leicht unterbrochen werden kann, wobei die Funktionsfähigkeit nur durch aufwändiges Zerstören der gebildeten Brücken von außen wieder aufgenommen werden kann.

DE 2 020 018, eine Zusatzpatentanmeldung zu DE 1 955 088, beschreibt eine Fortentwicklung der vorstehend beschriebenen Fördervorrichtung. Der am Boden des Sandbunkers angeordnete Kettenkratzförderer umfasst einen endlos umlaufenden Kettenstrang mit daran angeordneten schmalen und breiten Kratzern und ist unterhalb einer schmalen, nicht bis zum Boden des Sandbunkers reichenden Abdeckung angeordnet. Die Breite der Abdeckung ist so bemessen, dass sie die Erstreckung der schmalen Kratzer, nicht aber die der breiten Kratzer überdeckt. Der umlaufende Kettenstrang bildet einen entlang des Bodens des Bunkers verlaufenden Untertrum und einen parallel darüber angeordneten Obertrum. Die dem Obertrum zugeordneten breiten Kratzer greifen während der Bewegung des Kettenkratzförderers unterhalb der Abdeckung seitlich in den umgebenden Formsand ein und befördern diesen über eine unterhalb des Obertrums angeordnete, entlang der Bewegung des Obertrums verlaufende Öffnung in den Bereich des Untertrums. Von dort wird der Formsand von den dem Untertrum zugeordneten Kratzern durch eine seitliche Öffnung des Sandbunkers ausgetragen. Nachteilig ist bei dieser Anordnung ebenfalls, dass die gesamte Fördervorrichtung vollständig innerhalb des Formsandbunkers angeordnet und unter dem Formsand verschüttet ist, was Wartungs- und Reparaturarbeiten sowie eine Weitergabe des geförderten Formsandes erheblich erschwert.

DE 37 04 327 A1 beschreibt einen Kettenkratzförderer zum Austragen von Schüttgut aus einem Behälter, wobei der Kettenkratzförderer gleichzeitig dazu geeignet ist, das Schüttgut an einen erhöhten Ort zu fördern. Der Kettenkratzförderer umfasst einen ersten Bereich, der unterhalb des Behälters angeordnet ist und in dem das Schüttgut horizontal gefördert wird, und einen zweiten Bereich, der neben dem Behälter angeordnet ist und in dem das Schüttgut auch vertikal gefördert wird. Der Kettenkratzförderer umfasst einen endlos umlaufenden Kettenstrang, an dem in regelmäßigen Abständen Greifelemente angeordnet sind. Der Kettenstrang ist vollständig unterhalb des Behälters angeordnet, wobei die Greifelemente nicht in das Volumen des Behälters eingreifen. Im unteren Auslassbereich des Behälters ist ein Stausattel angeordnet, der sich parallel zu der Bewegungsrichtung des Kettenstrangs erstreckt. Ferner sind zwischen dem Obertrum und dem Untertrum des Kettenkratzförderers kleinere Stauelemente angeordnet, die quer zur Bewegungsrichtung des Kettenstrangs verlaufen.

DE 2 041 216 A1 beschreibt eine Bandfördervorrichtung zum Austragen von Schüttgütern, insbesondere Kartoffeln, aus einem Schüttgutbehälter. Die Bandfördervorrichtung umfasst ein endlos umlaufendes Transportband, an welchem in regelmäßigen Abständen Greifwerkzeuge angeordnet sind, die sich im Wesentlichen senkrecht zu dem Transportband erstrecken. Das Transportband wird mittels einer Antriebswalze angetrieben und auf einer weiteren Walze geführt. An einem ersten Ende des Transportbands greifen die auf dem Transportband angeordneten Greifwerkzeuge in eine Öffnung eines Schüttgutbehälters ein. Das Schüttgut wird an der Oberseite des Transportbandes gefördert und verlässt das Transportband an einem zweiten, dem Schüttgutbehälter gegenüberliegenden Ende des Transportbands. Unterhalb des zweiten Endes des Transportbandes ist ein weiteres Transportband angeordnet, über welches das Schüttgut dann weiter abtransportiert wird.

US 4,511,302 B2 beschreibt eine Vorrichtung, welche ein endlos umlaufendes Transportband umfasst. Das umlaufende Transportband ist unterhalb eines umschlossenen Raumes angeordnet und aus einzelnen Segementen zusammengesetzt, die an Ihrer Oberseite jeweils in verschiedenen Abständen Stemmwerkzeuge aufweisen. Die Vorrichtung dient dazu, aus einem zusammengepressten Paket von Konservendosen oder Getränkedosen jeweils einzelne Dosen zu lösen, um diese einer Wiederverwertung zuzuführen. Dazu wird ein solches Paket Getränkedosen in den umschlossenen Raum eingebracht und das umlaufende Transportband in Bewegung gesetzt. Die auf dem Transportband angeordneten Stemmwerkzeuge greifen in das Volumen des umschlossenen Raumes ein und lösen dort einzelne Dosen aus dem Paket.

Es ist die Aufgabe der Erfindung, eine verbesserte Bandfördervorrichtung anzugeben, durch die Schüttgut gleichmäßig aus einem Schüttgutbehälter austragbar ist, sowie ein Verfahren anzugeben, welches eine möglichst homogene Austragung von Schüttgut aus einem Schüttgutbehälter ermöglicht.

Diese Aufgabe wird erfindungsgemäß durch eine Bandfördervorrichtung mit den Merkmalen des Anspruchs 1, durch eine Giessereisandbehälteranordnung mit den Merkmalen des Anspruchs 9 sowie durch ein Verfahren mit den Merkmalen des Anspruchs 13 gelöst.

Eine Bandfördervorrichtung zum Austragen von Schüttgut aus einem Schüttgutbehälter umfasst ein bewegbares Transportband zur Aufnahme des auszutragenden Schüttguts, wobei das bewegbare Transportband außerhalb eines von dem Schüttgutbehälter umfassten Volumens angeordnet ist, und ein gemeinsam mit dem Transportband bewegbares, dem Transportband zugeordnetes Greifwerkzeug, wobei das Greifwerkzeug in das von dem Schüttgutbehälter umfasste Volumen eingreift. Durch das Anordnen eines Greifwerkzeugs an dem Transportband ist es vorteilhaft möglich, dass von dem Transportband nicht nur unmittelbar nahe einer Austrittsöffnung des Schüttgutbehälters befindliches Schüttgut ausgetragen wird, sondern das auch in den von der Austrittsöffnung entfernten Bereichen Schüttgut von dem Greifwerkzeug aufgenommen und aus dem Schüttgutbehälter ausgetragen wird. Damit wird es mit einer Bandfördervorrichtung erstmals vorteilhaft möglich, Schüttgut aus dem gesamten Bereich der Öffnung des Schüttgutbehälters auszutragen und somit eine homogene Entleerung des Schüttgutbehälters durchzuführen. Zugleich werden durch das Greifwerkzeug Verklumpungen innerhalb des Schüttgutes aufgebrochen, so dass die Fließfähigkeit des Schüttgutes in allen Bereichen der Öffnung des Schüttgutbehälters aufrechterhalten wird. Ein weiterer Vorteil ist, dass alle wesentlichen Elemente der Bandfördervorrichtung durch die Anordnung des bewegbaren Transportbandes außerhalb des von dem Schüttgutbehälter umfassten Volumens leicht für Wartungs- oder Reparaturarbeiten zugänglich sind, was Dauer und Kosten einer Reparatur wesentlich verringert. Darüber hinaus ist durch diese Anordnung eine erfindungsgemäße Bandfördervorrichtung einfach und zu geringen Kosten an bereits bestehenden Schüttgutbehältern nachrüstbar.

Vorzugsweise weist das Greifwerkzeug im wesentlichen eine Erstreckung in einer zu der Bewegungsrichtung des Transportbandes senkrecht verlaufenden Ebene auf. Dies ermöglicht eine besonders einfache Gestalt des Greifwerkzeugs, beispielsweise eine senkrecht von dem Transportband abstehende, im wesentlichen rechteckige Form. In dieser Gestalt greift das Greifwerkzeug ausgehend von dem außerhalb des Schüttgutbehälters angeordneten Transportband in das Volumen des Schüttgutbehälters ein und bildet dort ein in der Bewegungsrichtung des Transportbands bewegtes, das Schüttgut vor sich herschiebendes Element. Es versteht sich, dass das Greifwerkzeug jedoch auch jede andere, insbesondere auch eine komplexere Form aufweisen kann, beispielsweise mit einem sägezahnartig geformten oberen Bereich oder mit Vor- oder Rücksprüngen in Bewegungsrichtung des Transportbands. Es versteht sich ferner, dass das Greifwerkzeug auch in jedem anderen Winkel als in einem rechten Winkel zu dem Transportband stehen kann und insbesondere auch einen jederzeit verstellbaren Winkel zu dem Transportband aufweisen kann. Vorteilhaft führt ein in Bewegungsrichtung des Transportbands spitzer Winkel zwischen dem Transportband und dem Greifwerkzeug zu einer verbesserten Aufnahme von Schüttgut, da zwischen dem Tansportband und dem Greifwerkzeug ein geschützter Bereich zur Aufnahme von Schüttgut geschaffen wird. Umgekehrt reduziert ein in Bewegungsrichtung des Transportbands stumpfer Winkel zwischen dem Transportband und dem Greifwerkzeug vorteilhaft die notwendigen Kräfte für eine Bewegung des Transportbands durch das Schüttgut.

In einer bevorzugten Ausgestaltung weist das Transportband quer zu seiner Bewegungsrichtung eine Breite auf, wobei das Greifwerkzeug eine im Vergleich dazu gleiche Breite aufweist. Hierdurch wird vorteilhaft ermöglicht, dass während der Bewegung des Transportbandes Schüttgut über die gesamte Breite des Transportbandes von dem Greifwerkzeug erfasst und transportiert werden kann. Dies führt insbesondere zu einer über der gesamten Breite des Transportbandes homogenen Austragung von Schüttgut. Auch wird in dieser Ausgestaltung das gesamte, von dem Greifwerkzeug aufgenommene Schüttgut sicher entlang der Länge des Transportbandes bewegt.

In einer alternativen Ausgestaltung weist wenigstens ein Teil der Greifwerkzeuge eine im Vergleich zu der Breite des Transportbandes geringere Breite auf, beispielsweise nur die Hälfte der Breite des Transportbandes. Diese Ausgestaltung führt vorteilhaft dazu, dass über die Breite des Transportbandes zum einen Schüttgut durch das Greifwerkzeug über eine relativ lange Wegstrecke transportiert werden kann, während in einem zweiten, nicht von dem Greifwerkzeug überdeckten Bereich Schüttgut nur über eine relativ kurze Strecke transportiert wird. Insbesondere durch Anordnung mehrerer schmaler Greifelemente versetzt zueinander kann das Schüttgut somit in einem der gesamten Öffnung des Schüttgutbehälters entsprechenden Bereich durchmischt werden, was einen homogenen Sandaustrag weiter fördert. Vorzugsweise umfasst die Bandfördervorrichtung daher wenigstens zwei Greifwerkzeuge, die in einer Richtung quer zu der Bewegungsrichtung des Transportbandes versetzt zueinander angeordnet sind. Vorteilhaft weisen die Greifwerkzeuge verschiedene vertikale Erstreckungen auf, so dass sie verschieden weit in das Schüttgut eingreifen. Dies führt weiter zu einer verbesserten Durchmischung des Schüttguts und ermöglicht vorteilhaft, durch die Greifwerkzeuge Schüttgut aus unterschiedlich zu dem Transportband beabstandeten Bereichen auszutragen.

Zweckmäßig umfasst die Bandfördervorrichtung wenigstens zwei Greifwerkzeuge, die in einer Richtung parallel zu der Bewegungsrichtung des Transportbandes zueinander beabstandet angeordnet sind. Durch eine Anordnung mehrerer, voneinander in Bewegungsrichtung beabstandeter Greifwerkzeuge in relativ kurzen Abständen wird zwischen diesen Greifwerkzeugen vorteilhaft ein Bereich geschaffen, in dem eingedrungenes Schüttgut einfach und relativ ungestört durch weiteres umgebendes Schüttgut transportiert werden kann. Andererseits wird durch eine Anordnung relativ weit voneinander beabstandeter Greifwerkzeuge jeweils ein diesen Greifwerkzeugen zugeordneter Bereich geschaffen, in dem Schüttgut über relativ weite Strecken transportiert wird, während sich gleichzeitig dazwischen Bereiche bilden, in denen Schüttgut nur über relativ kurze Distanzen transportiert wird. Durch eine Kombination dieser Anordnungen wird insgesamt eine sehr gute Durchmischung des Schüttguts und eine homogene Austragung des Schüttguts erreicht. Insbesondere bevorzugt sind daher eine Mehrzahl von Greifwerkzeugen in unregelmäßigen Abständen über das Transportband verteilt, wobei es ganz besonders bevorzugt auch größere Bereiche des Transportbandes gibt, in denen keine Greifwerkzeuge vorgesehen sind.

Zweckmäßig sind die Greifwerkzeuge an dem Transportband lösbar festlegbar. Somit wird es einfach möglich, etwa Greifwerkzeuge verschiedener Größe und Form je nach Bedarf einzusetzen oder Greifwerkzeuge zu Reparatur- und Wartungszwecken von dem Transportband abzulösen. Weiterhin ergibt sich hierdurch die Möglichkeit, den Abstand zwischen den Greifwerkzeugen abhängig von den gewünschten Transportparametem wie Transportbandgeschwindigkeit, Austragungsvolumen pro Zeit oder Durchmischungsgrad des Schüttguts anzupassen.

Vorzugsweise ist das Greifwerkzeug durch wenigstens ein das Transportband durchsetzendes Befestigungselement festlegbar. Somit kann das Greifwerkzeug auf einfache Weise, beispielsweise durch Klemmen, sicher an dem Transportband festgelegt werden. Besonders bevorzugt weist das Greifwerkzeug dazu einen parallel zu dem Transportband verlaufenden Abschnitt auf, der von Befestigungselementen wie etwa Schrauben oder ähnlichem durchsetzt werden kann. Das Greifwerkzeug kann dann besonders einfach durch ein auf der gegenüberliegenden Seite des Transportbands angeordnetes, ebenfalls von Befestigungselementen durchsetzbares Klemmelement, beispielsweise eine entsprechend des Abschnitts des Greifwerkzeugs geformte Klemmleiste, festgelegt werden.

Erfindungsgemäß umfasst die Bandfördervorrichtung weiter wenigstens ein vorzugsweise an einem Greifwerkzeug angeordnetes Stemmwerkzeug. Das Stemmwerkzeug weist zweckmäßig eine im Vergleich zu der vertikalen Erstreckung des Greifwerkzeugs größere vertikale Erstreckungen auf, so dass das Stemmwerkzeug bei der Bewegung des Greifwerkzeugs durch das Schüttgut über das Greifwerkzeug hinaus in das Schüttgut eindringt und es auflockert. Vorzugsweise weist das Stemmwerkzeug dazu eine im Vergleich zu der Breite des Greifwerkzeuges geringere Breite auf, wobei das Stemmwerkzeug insbesondere bevorzugt in Bewegungsrichtung des Transportbandes eine im Querschnitt keilförmige Form aufweist, was eine Bewegung durch das Schüttgut erleichtert und hilft, Verklumpungen in dem Schüttgut zu lösen. Ein weiterer Vorteil des Stemmwerkzeugs ist, dass auch in den Fällen, in denen ein relativ langsames Austragen des Schüttguts erwünscht ist und in denen deshalb eine niedrige vertikale Erstreckung des Greifwerkzeugs gewählt wird, durch Wahl einer großen vertikalen Erstreckung des Stemmwerkzeugs ein relativ großer Volumenanteil des Schüttguts durchmischt und aufgelockert werden kann.

Vorzugsweise ist das Stemmwerkzeug an dem Greifwerkzeug lösbar festlegbar. Alternativ ist das Stemmwerkzeug gemeinsam mit dem Greifwerkzeug lösbar an dem Transportband festgelegt. In einer weiteren alternativen Ausgestaltung ist das Stemmwerkzeug in Bewegungsrichtung des Transportbandes von dem Greifwerkzeug beabstandet angeordnet. Insbesondere, wenn mehrere Greifwerkzeuge und Stemmwerkzeuge vorgesehen sind, kann durch eine beispielsweise abwechselnde, zueinander beabstandete Anordnung von Greifwerkzeugen und Stemmwerkzeugen Schüttgut vorteilhaft zunächst durch die Stemmwerkzeuge aufgelockert und durch die folgenden Greifwerkzeuge aufgenommen werden.

Vorzugsweise handelt es sich bei dem Transportband um ein endlos umlaufendes Band. In dieser Ausgestaltung ist die Ausdehnung des Transportbandes dabei vorteilhaft so bemessen, dass das Transportband den gesamten Bereich unterhalb einer Öffnung des Schüttgutbehälters abdeckt und darüber hinaus seitlich in Richtung der Transportbewegung soweit über die Öffnung hinaussteht, dass bei einem bewegungslosen Transportband aus der Öffnung austretendes Schüttgut noch auf dem Transportband zum Liegen kommt und somit die Öffnung des Schüttgutbehälters gegen ein weiteres Austreten des Schüttgutes abgedichtet ist. Weiter ist es bei dieser Ausgestaltung des Transportbandes einfach möglich, durch Anordnung weiterer Transportvorrichtungen unterhalb eines Umkehrpunkts des Transportbandes Schüttgut sehr einfach an eine weitere Transportvorrichtung zu übergeben. Ferner sind bei einer solchen Anordnung alle Elemente des Transportbandes einfach für eine Reparatur oder Wartung zugänglich, wobei insbesondere bevorzugt an einer Seite des Transportbandes in einem Bereich außerhalb der Öffnung des Schüttgutbehälters ein Bereich vorgesehen ist, in dem das Transportband zum Austausch der Greifwerkzeuge einfach zugänglich ist. Vorzugsweise ist an dieser Stelle ein Wartungsplatz vorgesehen, wozu zweckmäßig Vorkehrungen für einen vereinfachten Zugang zu den Elementen der Bandfördervorrichtung, insbesondere zu den Greifwerkzeugen und Stemmwerkzeugen vorgesehen sind. Weiter sind vorzugsweise an dem Wartungsplatz Vorrichtungen für einen sicheren Zugang zu der Bandfördervorrichtung vorgesehen, insbesondere eine Vorrichtung zur Kontrolle des Transportbandstillstands.

Zweckmäßigerweise ist das Transportband in zwei entgegengesetzte Richtungen antreibbar bewegbar. Hierdurch wird vorteilhaft eine Bewegungsumkehr des Transportbandes ermöglicht, was es insbesondere in Kombination mit einem endlos umlaufenden Transportband möglich macht, Schüttgut in zwei unterschiedlichen Transportrichtungen aus dem Schüttgutbehälter auszutragen. Insbesondere in dieser Ausgestaltung ist es vorteilhaft, unterhalb des Transportbandes eine weitere Transportvorrichtung vorzusehen, die unabhängig von der Bewegungsrichtung des Transportbandes das ausgetragene Schüttgut für einen Weitertransport aufnehmen kann. Ein besonderer Vorteil der Umkehrbarkeit der Transportbandbewegung ist, dass hierdurch besonders effizient eine gute Durchmischung des Schüttguts und ein homogener Schüttgutaustrag erreicht werden kann. Durch die Umkehrbarkeit der Bewegung des Transportbands, der Greifwerkzeuge und der gegebenenfalls vorgesehenen Stemmwerkzeuge wird vorteilhaft ermöglicht, einer Ausbildung eines Bereichs nicht bewegten Schüttguts entfernt von einer Austrittsöffnung einfach entgegenzuwirken.

Zweckmäßig ist das Transportband durch wenigstens ein antreibbares Rollenelement antreibar. Vorzugsweise sind dabei dem Transportband wenigstens zwei in ihrem Abstand verstellbare Rollenelemente zugeordnet, wobei vorteilhaft durch die Rollenelemente eine Spannung des Transportbandes aufrechterhalten werden kann. Besonders bevorzugt wird dabei wenigstens eines der Rollenelemente von einem Federelement so vorgespannt, dass einerseits eine Spannung auf das Transportband übertragen wird und andererseits eine Dehnungsbelastung des Transportbandes günstig von dem Federelement aufgenommen und gedämpft wird.

In einer bevorzugten Ausgestaltung ist das Transportband unterhalb einer Öffnung des Schüttgutbehälters angeordnet, so dass aus der Öffnung austretendes Schüttgut unmittelbar auf das Transportband gelangt. Besonders bevorzugt ist dabei oberhalb der Öffnung ein Stauelement angeordnet, welches einen großen Teil des Gewichtes des Schüttgutes aufnimmt und das Transportband somit entlastet. Dies reduziert vorteilhaft die Kraft, die zur Aufrechterhaltung der Transportbandbewegung notwendig ist, und vereinfacht das Auflockern und Durchmischen des Schüttguts unterhalb des Stauelements. Das Stauelement ist dabei zweckmäßig innerhalb des Volumens des Schüttgutbehälters angeordnet. Weiterhin weist das Stauelement zweckmäßig zu den Wänden des Schüttgutbehälters einen genügend großen Abstand auf, so dass Schüttgut ohne Brückenbildung in den Bereich unterhalb des Stauelements gelangen kann.

Vorzugsweise weist die Öffnung des Schüttgutbehälters in der Bewegungsrichtung des Transportbandes eine Länge auf, wobei das Stauelement im Vergleich zu dieser Länge eine geringere Länge aufweist. Somit wird vorteilhaft das aus der Öffnung austretende Schüttgut in einen ersten Bereich, der nahe des Austrittsbereichs des Transportbandes liegt, und einen zweiten Bereich, der nahe eines Eintrittsbereichs des Transportbandes liegt, aufgeteilt, wobei Schüttgut in dem Bereich nahe des Eintrittsbereichs günstig von den Greifwerkzeugen abtransportiert wird und wobei Schüttgut nahe des Austrittsbereichs von den Bereichen des Transportbandes ohne Greifwerkzeug einfach ausgetragen werden kann. Vorteilhaft wird somit die gleichzeitige Austragung von Schüttgut aus beiden Bereichen ermöglicht.

In einer bevorzugten Ausgestaltung weist das Stauelement wenigstens ein vorzugsweise als öffenbares Schieberelement ausgebildetes Sperrorgan auf. Besonders bevorzugt umfasst das Stauelement dabei sogar eine Mehrzahl von Schieberelementen. Die Schieberelemente sind zweckmäßig so ausgestaltet, dass sie von einer geöffneten in eine geschlossene Position verlagerbar sind, wobei die Schieberelemente in der geschlossenen Position einen Bereich oberhalb des Transportbands überdecken und in der geöffneten Position diesen Bereich freigeben. Durch die Schieberelemente wird es vorteilhaft ermöglicht, in verschiedenen Bereichen der Öffnung des Schüttgutbehälters steuerbar einen Austritt von Schüttgut zu ermöglichen oder zu verhindern. Zweckmäßig können die Schieberelemente in der geschlossenen Position jeweils das Gewicht des über Ihnen befindlichen Schüttguts tragen.

Bevorzugt ist eine Steuerungsvorrichtung vorgesehen, durch welche das wenigstens eine Schieberelement steuerbar von einer geschlossenen in eine geöffnete Position verbringbar ist. Vor allem wenn eine Mehrzahl von Schieberelementen vorgesehen ist, kann durch die Steuerungsvorrichtung, beispielsweise durch ein abwechselndes Öffnen und Schließen der Schieberelemente, eine homogene Austragung von Schüttgut aus dem Schüttgutbehälter erreicht werden, wobei insbesondere vorteilhaft zum einen die gesamte pro Zeit aus dem Schüttgutbehälter ausgetragene Schüttgutmenge und zum anderen der genaue Bereich, aus dem das Schüttgut ausgetragen werden soll, gesteuert werden kann.

Vorzugsweise handelt es sich bei der Steuerung der Schieberelemente um eine speicherprogrammierbare Steuerung (SPS), durch die vorteilhaft eine an die Geometrie und Eigenschaften des Schüttgutbehälters, die Fließeigenschaften des Schüttguts und die Prozessvorgaben des weiteren Verarbeitungsprozesses angepasste Schüttgutaustragung erreicht werden kann.

Besonders bevorzugt umfasst die Steuerung der Schieberelemente eine Regelvorrichtung, die die Position der Schieberelemente von in Abhängigkeit von Schüttgutparametern wie der Temperatur und/oder Verweildauer des Schüttguts und/oder Füllhöhe des Schüttgutbehälters oder in Abhängigkeit von der Position des Transportbandes regelt. Zweckmäßig sind dazu Sensorelemente vorgesehen, welche den Ist-Zustand des Schüttguts in dem Schüttgutbehälter beispielsweise durch Lichtschranken, Bilderkennung, Ultraschallmessung, Temperatur-, Feuchtigkeits-, Gewichts-, Druck- oder Geschwindigkeitsmessung erfassen und entsprechende Messwerte als Eingangsgröße für eine Regelung bereitstellen. Bevorzugt umfasst die Regelvorrichtung ferner ein vorzugsweise mikroprozessorgestütztes Regelverfahren, beispielsweise ein neuronales Netzwerk.

Eine erfindungsgemäße Schüttgutbehälteranordnung umfasst wenigstens einen Schüttgutbehälter, wobei dem Schüttgutbehälter eine Bandfördervorrichtung zugeordnet ist. Die Bandfördervorrichtung ist dabei vorzugsweise unterhalb des Schüttgutbehälters durch eine Aufhängung festgelegt. Insbesondere hierdurch ist die Bandfördervorrichtung vorteilhaft sehr einfach an bereits bestehenden Schüttgutbehältern nachrüstbar.

Vorzugsweise ist in der Schüttgutbehälteranordnung unterhalb der Bandfördervorrichtung eine Transportvorrichtung zur Aufnahme von von Bandfördervorrichtung ausgetragenem Schüttgut vorgesehen. Hierdurch ist vorteilhaft möglich, von der Bandfördervorrichtung ausgetragenes Schüttgut unabhängig von der Bewegungsrichtung des Transportbands einfach weiter zu transportieren. Ein weiterer Vorteil ist, dass in einer solchen Anordnung leicht mehrere Schüttgutbehälter und mehrere Bandfördervorrichtungen nahe beieinander angeordnet werden können, deren ausgetragenes Schüttgut auf einer allen Bandfördervorrichtungen gemeinsam zugeordneten Transportvorrichtung weiter transportiert werden kann.

Besonders bevorzugt wird die Schüttgutbehälteranordnung für eine Regeneration (Mauken) von Formsand verwendet. Hierbei kommen die beschriebenen Vorteile der Bandfördervorrichtung und der Schüttgutbehälteranordnung vorteilhaft zum Tragen, da erstmals durch diese Anordnung eine homogene Austragung von Formsand aus einem Schüttgutbehälter ermöglicht wird.

Ein erfindungsgemäßes Verfahren zum Fördern von Schüttgut aus einem Schüttgutbehälter, bei dem Schüttgut aus dem Behälter von einem unterhalb einer Öffnung des Schüttgutbehälters umlaufenden Transportband abgefördert wird, sieht vor, dass das Schüttgut in einem ersten Bereich des Transportbandes von einem von dem Transportband nach oben vorstehendem Greifwerkzeug aufgenommen und in dem Bereich des Transportbandes gehalten wird, und dass das Schüttgut in einem zweiten Bereich des Transportbandes durch reibenden Kontakt mit dem Transportband in Transportrichtung befördert wird.

Weitere Vorteile und Merkmale der Erfindung ergeben sich aus der nachfolgenden Erläuterung bevorzugter Ausführungsbeispiele und den abhängigen Ansprüchen.

Nachstehend wird die Erfindung unter Bezugnahme auf die anliegenden Zeichnungen anhand bevorzugter Ausführungsbeispiele näher erläutert und beschrieben.
- Fig. 1: zeigt eine schematische Seitenansicht einer erfindungsgemäßen Bandfördervorrichtung.
- Fig. 2: zeigt einen Schnitt durch die Bandfördervorrichtung entlang der Ebene II-II.
- Fig. 3: zeigt einen Schnitt durch ein Greifwerkzeug parallel zu der Bewegungsrichtung des Transportbandes.
- Fig. 4: zeigt einen Schnitt durch ein Greifwerkzeug senkrecht zu der Bewegungsrichtung des Transportbandes.
- Fig. 5: zeigt einen Schnitt durch ein Stemmwerkzeug parallel zu der Bewegungsrichtung des Transportbandes.
- Fig. 6: zeigt eine Draufsicht auf ein Stemmwerkzeug von oben.
- Fig. 7: zeigt eine Vergrößerung des Schnitts gemäß Fig. 2 mit teilweise geschnittenem Stemm- und Greifwerkzeug.
- Fig. 8: zeigt ein zweites Ausführungsbeispiel einer erfindungsgemäßen Bandfördervorrichtung in einem der Darstellung in Fig. 7 entsprechenden Schnitt.
- Fig. 9: zeigt eine Draufsicht auf ein Element einer erfindungsgemäßen Bandfördervorrichtung entsprechend eines dritten Ausführungsbeispiels.
- Fig. 10: zeigt eine schematische Draufsicht auf weitere Elemente des dritten Ausführungsbeispiels.

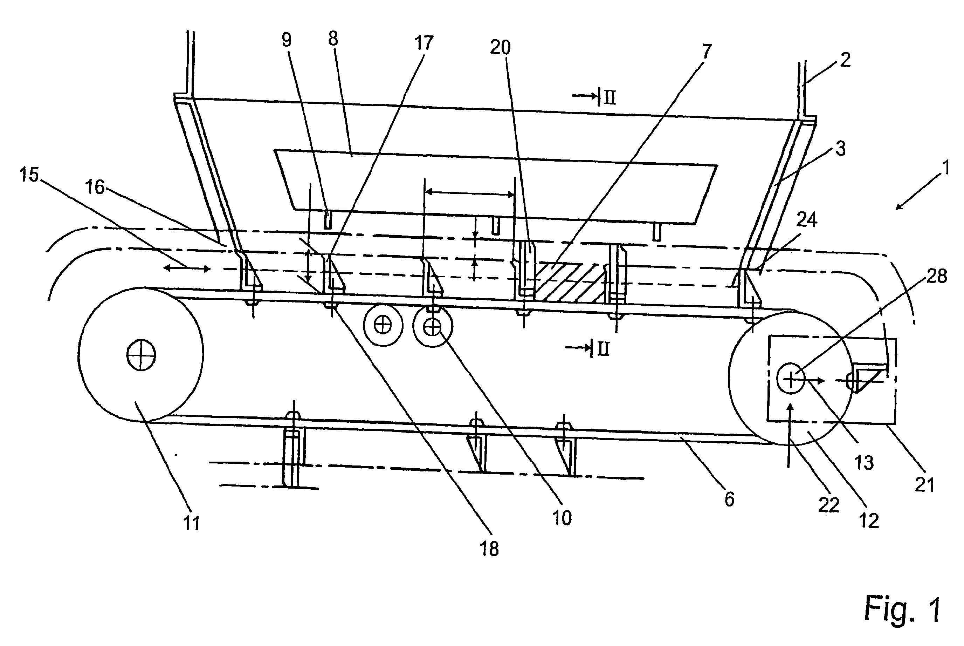

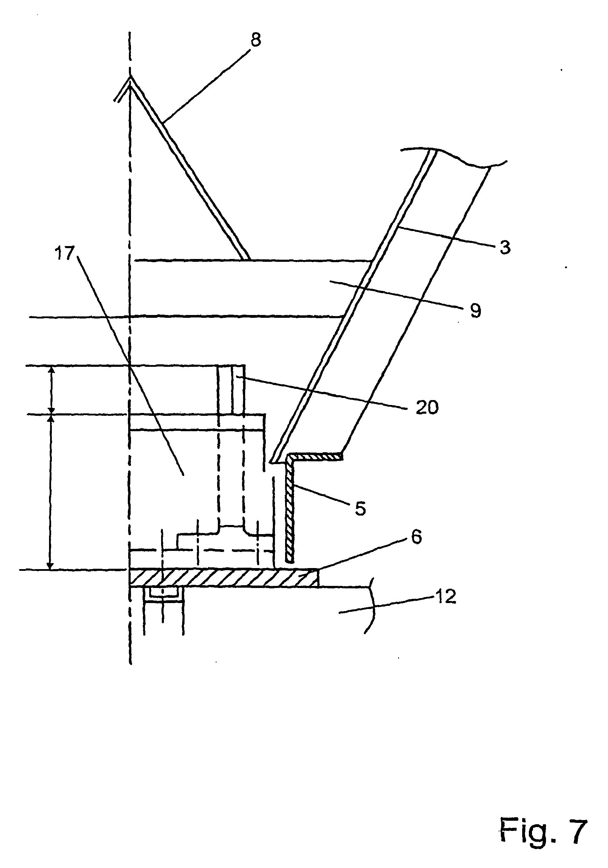

Fig. 1 bis 7 zeigt ein erstes bevorzugtes Ausführungsbeispiel einer erfindungsgemäßen Bandfördervorrichtung 1. Die Bandfördervorrichtung 1 ist unterhalb eines Schüttgutbehälters 2 angeordnet, der in seinem unteren Bereich zueinander geneigte, nach Art eines Trichters verlaufende Seitenwände 3 aufweist. Die unteren Kanten der Seitenwände 3 definieren dabei eine untere Öffnung 4 des Schüttgutbehälters 2. Die untere Öffnung 4 wird seitlich von Sandführungsschienen 5 vertikal nach unten hin begrenzt. Unterhalb der unteren Öffnung 4 ist ein endlos umlaufendes Transportband 6 angeordnet. Innerhalb des Schüttgutbehälters 2 befindliches Schüttgut gelangt durch die untere Öffnung 4 auf das Transportband 6, wobei ein seitliches Austreten des Schüttguts durch die Sandführungsschienen 5 verhindert wird. Zur vollständigen Abdichtung des Bereichs zwischen den Sandführungsschienen 5 und dem Transportband 6 sind an der Außenseite der Sandführungsschienen 5 nicht weiter dargestellte Abdichtungen aus Kunststoff vorgesehen. Zusätzlich weist das Transportband 6 im Bereich der Innenseiten der Sandführungsschienen 5 (nicht dargestellte) Dichtungswülste auf, die parallel zu den Sandführungsschienen 5 anliegend an diesen verlaufen und die Seitenflächen weiter gegen das Austreten von Schüttgut abdichten.

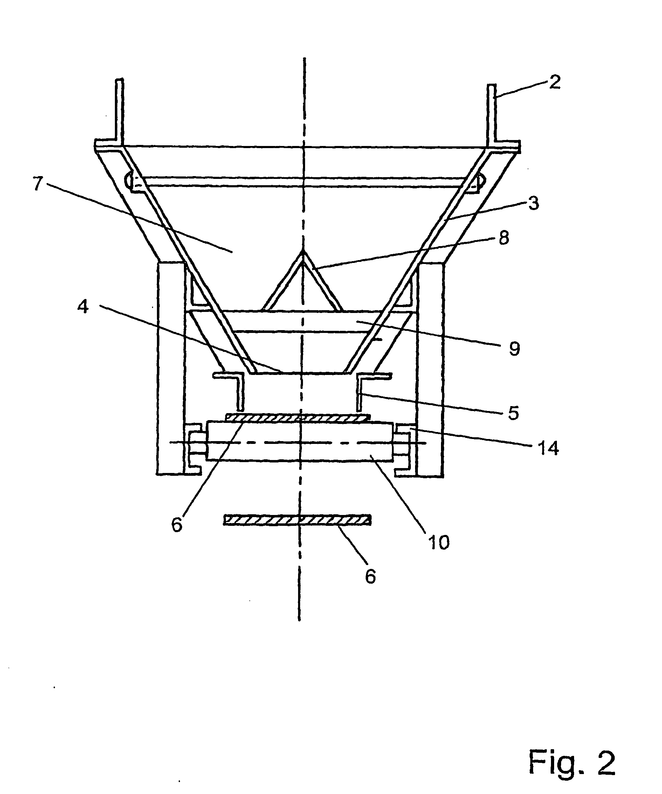

Innerhalb des unteren Bereichs des Schüttgutbehälters 2 ist ein parallel zu dem Transportband 6 verlaufender Stausattel 8 angeordnet, der gemeinsam mit den schräg zulaufenden Seitenwänden 3 einen großen Teil der Gewichtskräfte des Schüttguts 7 aufnimmt. Der Stausattel 8 wird dazu von an den Seitenwänden 3 befestigten Stützstreben 9 gehalten. Der Stausattel 8 hat im Querschnitt die Form eines gleichschenkligen Dreiecks mit einer unten liegenden Basis und zwei Seitenflächen, die in Richtung des Transportbands 6 rutschendes Schüttgut 7 zu der unteren Öffnung 4 hin leiten. Wie in Fig. 1 und 2 gut zu erkennen ist, überdeckt der Stausattel 8 insgesamt einen Bereich, der kleiner ist als die untere Öffnung 4 des Schüttgutbehälters 2.

Das umlaufende Transportband 6 wird entlang seines oberen Abschnitts von drehbaren Tragrollen 10 gehalten, wie insbesondere in Fig. 1 und 2 gut zu erkennen ist. Zur besseren Übersicht sind in Fig. 1 nur zwei aus der Vielzahl von Tragrollen 10 dargestellt. Die Tragrollen 10 sind seitlich drehbar in einem Bandgerüst 14 gelagert. An zwei sich gegenüberliegenden, den Umkehrpunkt des Transportbands bildenden Seiten sind zwei antreibbare Rollenelemente, nämlich eine erste Antriebsrolle 11 und eine zweite Antriebsrolle 12, vorgesehen. Die Antriebsrollen 11, 12 sind mittels (nicht dargestellter) Elektromotoren antreibbar und ermöglichen eine Bewegung des Transportbandes in zwei entgegengesetzte Bewegungsrichtungen 15. An der zweiten Antriebsrolle 12 ist eine Spannvorrichtung 28 vorgesehen, durch welche das Transportband 6 mittels einer Federkraft 13 vorgespannt wird. Hierdurch wird einerseits eine straffe Führung des Transportbandes 6 sichergestellt, andererseits werden jedoch auch auf das Transportband 6 während seiner Bewegung einwirkende Dehnungsspannungen wirksam gedämpft.

Die Unterkanten der Seitenwände 3, die Sandführungsschienen 5 und das Transportband 6 definieren auf den Seiten des Schüttgutbehälters 2 eine seitliche Austrittsöffnung 16 und eine seitliche Eintrittsöffnung 24. Auf dem Transportband 6 befindliches Schüttgut 7 kann durch eine Bewegung des Transportbands 6 entgegen des Uhrzeigersinns durch die seitliche Austrittsöffnung 16 ausgetragen werden. Umgekehrt vertauschen Austrittsöffnung 16 und Eintrittsöffnung 24 bei einer Bewegung des Transportbands 6 im Uhrzeigersinn ihre Bedeutung, so dass Schüttgut 7 dann durch die Eintrittsöffnung 24 ausgetragen werden kann.

Auf dem Transportband 6 sind beabstandet zueinander Greifwerkzeuge 17 angeordnet. Die Greifwerkzeuge 17 stehen im wesentlichen senkrecht von dem Transportband 6 ab und greifen im Bereich der Öffnung 4 in das Schüttgut 7 ein. Die Greifwerkzeuge 17 sind mittels unterhalb des Transportbandes 6 angeordneter Klemmschienen 18 und das Transportband 6 durchgreifender Befestigungselemente 19 klemmend an dem Transportband 6 festgelegt, so dass während einer Bewegung des Transportbandes 6 eine sichere Verbindung zwischen den Greifwerkzeugen 17 und dem Transportband 6 gegeben ist. Die Greifwerkzeuge 17 weisen quer zu der Bewegungsrichtung des Transportbandes 6 eine Breite B auf, die im wesentlichen der Breite des Transportbandes 6 entspricht. Dadurch kann Schüttgut 7 entlang der gesamten Breite B von den Greifwerkzeugen 17 in die Bewegungsrichtung des Transportbands 6 verschoben werden. Alternativ ist es jedoch möglich, dass die Greifwerkzeuge 17 eine gegenüber der Breite B des Transportbandes 6 kleinere Breite B1 aufweisen. In dieser Ausgestaltung können die Greifwerkzeuge 17 so an dem Transportband 6 angeordnet werden, dass seitlich Lücken zwischen den Greifwerkzeugen 17 und den Sandführungsschienen 5 verbleiben, durch welche während der Bewegung des Transportbandes 6 Schüttgut durchtreten kann.

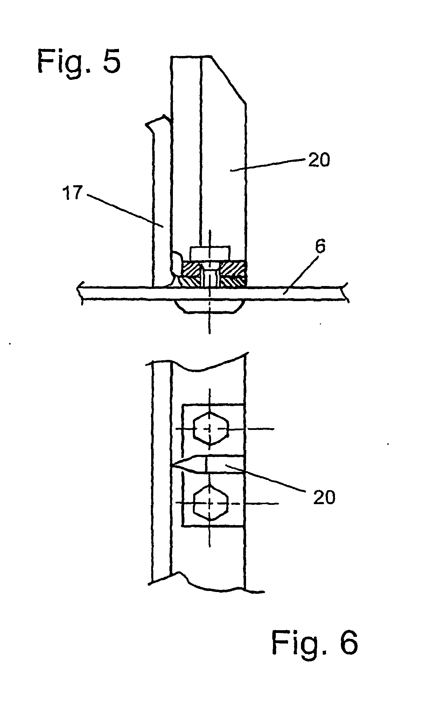

Im Bereich der Greifwerkzeuge 17 sind weiter Stemmwerkzeuge 20 vorgesehen, die im Vergleich zu den Greifwerkzeugen 17 nur eine geringe Breite aufweisen und die Greifwerkzeuge 17 vertikal in der sich vom Transportband 6 entfernenden Richtung übergreifen. Insbesondere in Fig. 6 ist gut zu erkennen, dass die Stemmwerkzeuge 20 eine in Bewegungsrichtung 15 des Transportbandes 6 spitz zulaufende Keilform aufweisen.

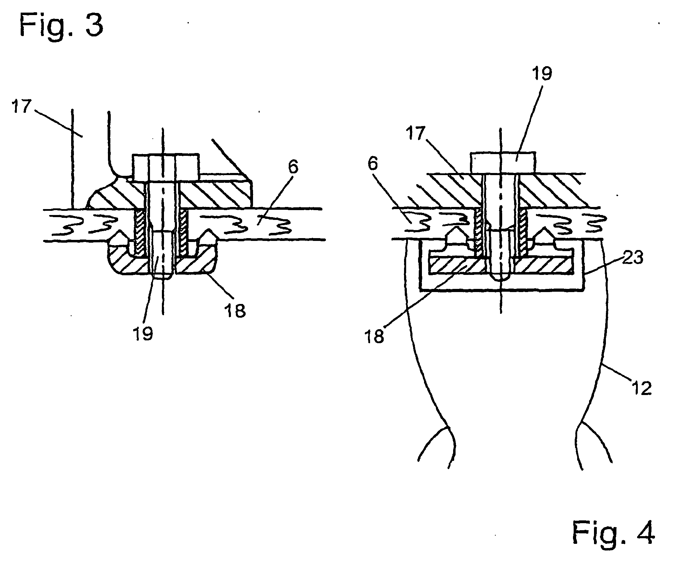

Nahe der zweiten Antriebsrolle 12 ist ein Wartungsplatz 21 vorgesehen, an dem Wartungsarbeiten und insbesondere ein Austausch von Greifwerkzeugen 17 oder Stemmwerkzeugen 20 an dem Transportband 6 vorgenommen werden können. Ferner ist an der zweiten Antriebsrolle 12 eine Stillstandsüberwachung 22 vorgesehen, um eine ungewollte Bewegung des Transportbandes 6 während Wartungsarbeiten sicher verhindern zu können. Um ein Auswechseln der Greifwerkzeuge 17 und Stemmwerkzeuge 20 zu erleichtern, sind an der zweiten Antriebsrolle 12 Ausnehmungen 23 vorgesehen, in welche die Klemmschiene 18 eingreift, wie insbesondere in Fig. 4 gut zu erkennen ist. Auch die erste Antriebsrolle 11 und die Tragrollen 10 weisen entsprechende Ausnehmungen für die Klemmschienen 18 auf, um einen guten Kontakt zwischen der Rollenoberfläche und dem Transportband 6 und somit eine sichere Führung des Transportbands 6 zu gewährleisten.

Die Erfindung funktioniert nun wie folgt:

Durch die erste Antriebsrolle 11 und die zweite Antriebsrolle 12 wird das Transportband 6 in eine umlaufende Bewegung versetzt, beispielsweise entgegen dem Uhrzeigersinn in Fig. 1. Bei dieser Bewegung des Transportbandes 6 wird Schüttgut durch die seitliche Austrittsöffnung 16 aus dem Schüttgutbehälter 2 ausgetragen. Dabei kommt es durch die am Umfang des Transportbands 6 in unregelmäßigen Abständen angeordneten Greifwerkzeuge 17 zu den beiden folgenden, unterschiedlichen Transportmechanismen: In den Bereichen des Transportbandes 6, die entgegen der Bewegungsrichtung 15 des Transportbandes 6 weit von einem Greifwerkzeug 17 entfernt sind, wird oberhalb des Transportbandes 6 befindliches Schüttgut durch die Bewegung des Transportband 6 transportiert. Der Transport erfolgt dabei jedoch jeweils nur über kurze Strecken, da eine Weiterbewegung dann von dem umgebenden Schüttgut behindert wird. Durch diesen Mechanismus aus der Austrittsöffnung 16 ausgetragenes Schüttgut 7 wird daher zum größten Teil aus dem Bereich nahe der Austrittsöffnung 16 entnommen. Andererseits wird in den nahe vor den Greifwerkzeugen 17 liegenden Bereichen des Transportbandes 6 Schüttgut von den Greifwerkzeugen 17 aufgenommen und über relativ weite Strecken tranportiert. Dabei wird insbesondere beim Eintreten der Greifwerkzeuge 17 durch die seitliche Eintrittsöffnung 24 in den Bereich unterhalb der Öffnung 4 Schüttgut 7 von den Greifwerkzeugen 17 aufgenommen und in Richtung der seitlichen Austrittsöffnung 16 transportiert. Hierdurch kommt es vornehmlich unmittelbar hinter der Eintrittsöffnung 24 bis hin zu einem mittleren Bereich zwischen der Eintrittsöffnung 24 und der Austrittsöffnung 16 zu einer Aufnahme von Schüttgut, so dass insgesamt aus allen Bereichen unterhalb der Öffnung 4 Schüttgut 7 durch die seitliche Austrittsöffnung 16 aus dem Schüttgutbehälter 2 ausgetragen wird. Somit wird eine gleichmäßige Austragung von Schüttgut 7 aus dem Schüttgutbehälter 2 erreicht. Die über die Greifwerkzeuge 17 in das Schüttgut 7 hineingreifenden Stemmwerkzeuge 20 fördern die Austragung des Schüttguts 7 weiter, in dem Verklumpungen zwischen einzelnen Teilchen des Schüttguts 7 gelöst und das Schüttgut 7 insgesamt fließfähig gehalten wird.

Weiter kann insbesondere durch eine Umkehr der Bewegungsrichtung 15 des Transportbandes 6 in regelmäßigen Abständen die Schüttgutaustragung noch weiter homogenisiert werden, da hierdurch die seitliche Austrittsöffnung 16 und die seitliche Eintrittsöffnung 24 ihre Funktion tauschen und durch die Greifwerkzeuge 17 nun Schüttgut 7 ausgehend von der seitlichen Austrittsöffnung 16 über längere Strecken in Richtung der seitlichen Eintrittsöffnung 17 transportiert wird.

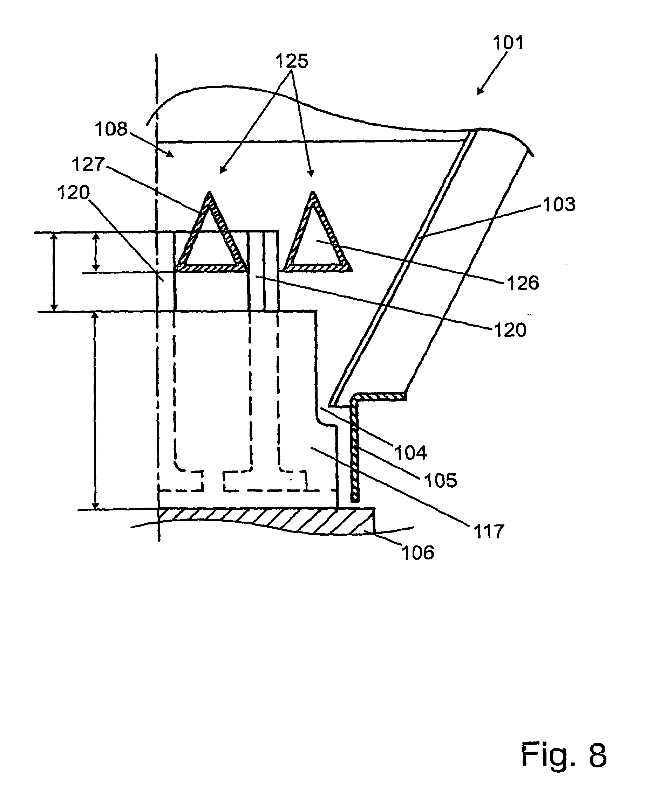

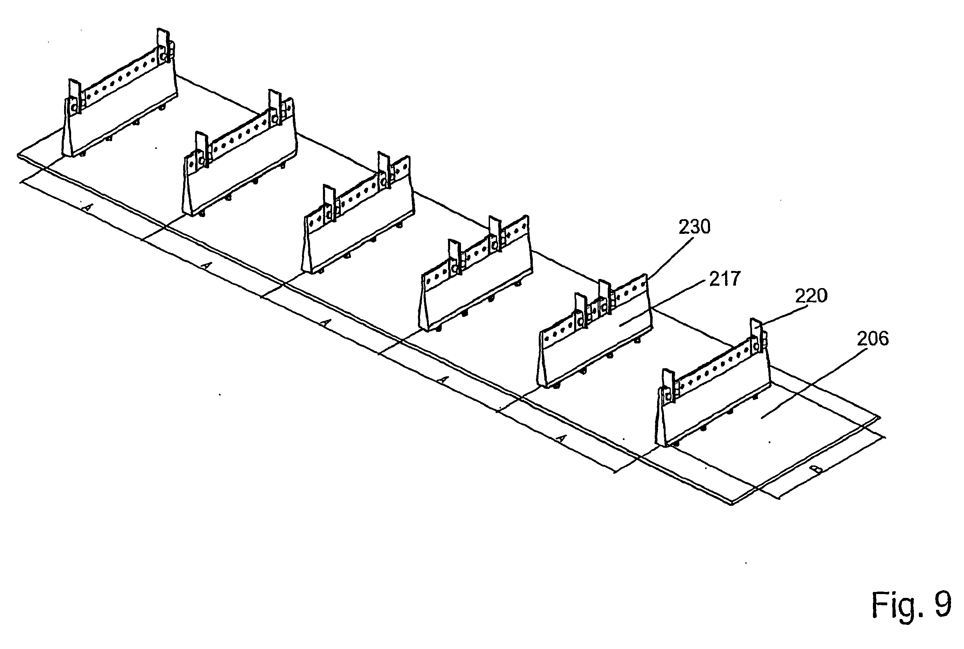

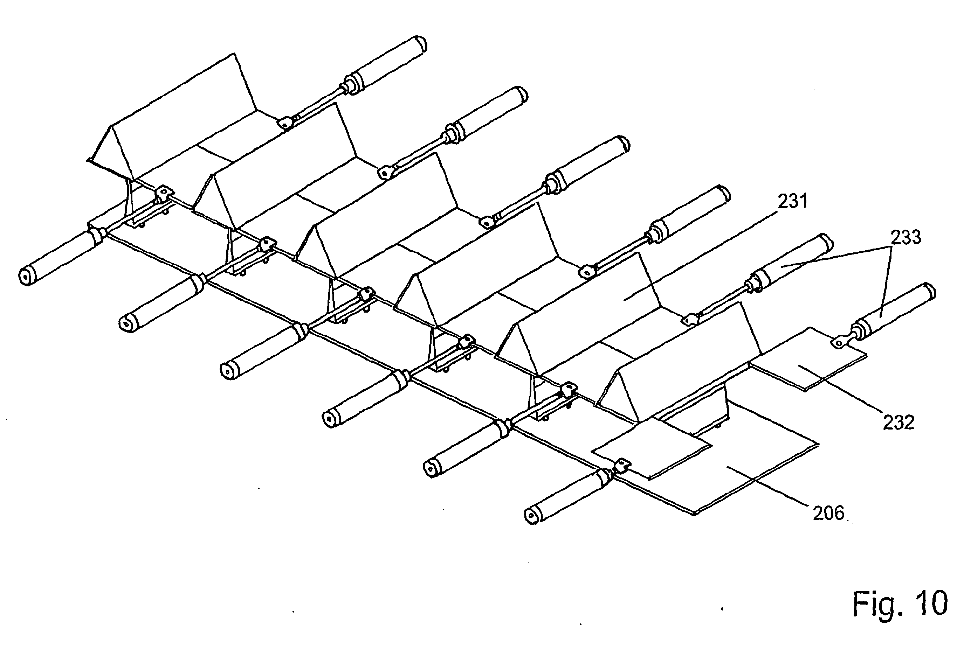

In Fig. 8 ist ein Schnitt durch eine alternative Ausführungsform einer Bandfördervorrichtung 101 gezeigt. Da die Bandfördervorrichtung 101 insgesamt spiegelsymmetrisch bezüglich einer das Transportband 106 mittig durchsetzenden, senkrecht zu dem Transportband 106 verlaufenden Ebene ist, ist nur eine Hälfte des Schnitts gezeigt. Elemente, die gegenüber der in Fig. 1 bis Fig. 7 gezeigten ersten Ausführungsform strukturell vergleichbar sind, haben ein um 100 vermehrtes Bezugszeichen. Oberhalb des Transportbandes 106 ist seitlich eine Sandführungsschiene 105 und daran anschließend eine Seitenwand 103 angeordnet. Dem Transportband 106 ist ein Greifwerkzeug 117 mit zwei Stemmwerkzeugen 120 zugeordnet. Im Unterschied zu dem ersten. Ausführungsbeispiel ist oberhalb der Öffnung 104 des Schüttgutbehälters 102 ein zu einem Stauelement 108 gehörender, insgesamt mit 125 bezeichneter Staurost vorgesehen, der aus einzelnen Staurostelementen 126, 127 besteht. Zwischen den Staurostelementen 126, 127, die parallel zu dem Transportband 106 verlaufen, greift das Stemmwerkzeug 120 in das Schüttgut ein. Das Greifwerkzeug 117 ist hingegen vollständig unterhalb der Staurostelemente 126, 127 angeordnet. Durch das Eingreifen des Stemmwerkzeugs 120 zwischen die Staurostelemente 126, 127 wird vorteilhaft eine Brückenbildung des Schüttguts im Bereich der Staurostelemente 126, 127 unterdrückt, so dass eine homogene, unterbrechungsfreie Austragung von Schüttgut 107 ermöglicht wird. In Fig. 9 und Fig. 10 sind Teile eines dritten Ausführungsbeispiels einer erfindungsgemäßen Bandfördervorrichtung dargestellt. Elemente, die mit jeweiligen Elementen des ersten Ausführungsbeispiels strukturell vergleichbar sind, tragen ein um 200 vermehrtes Bezugszeichen. An dem Transportband 206 sind Greifwerkzeuge 217 festgelegt, die an ihrem oberen Ende Befestigungsöffnungen 230 aufweisen. An diesen Befestigungsöffnungen sind Stemmwerkzeuge 220 lösbar festlegbar, wobei durch die Befestigungsöffnungen 230 verschiedene Positionen für die Stemmwerkzeuge 220 vorgegeben sind. Oberhalb des Transportbandes 206 sind zu einem Stauelement 208 gehörende Staurostelemente 231 angeordnet, die eine quer zu der Bewegungsrichtung des Transportbandes 206 angeordnete Ausrichtung aufweisen und zwischen denen jeweils zwei verschiebbar an den Staurostelementen 231 aufgenommenene Schieberelemente 232 angeordnet sind. Die Schieberelemente 232 können parallel zu dem Transportband 206 seitlich durch die (nicht dargestellten) Seitenwände verschoben werden, wozu die Schieberelemente 232 mit steuerbaren Antriebselementen 233 verbunden sind. Die Antriebselemente 233 üben dazu pneumatisch angetrieben eine horizontal in Erstreckungsrichtung der Schieberelemente 232 gerichtete Kraft auf die Schieberelemente 232 aus. Es versteht sich, dass alternativ andere Antriebsmechanismen für die Antriebselemente 233 vorgesehen sein können, etwa ein hydraulischer oder elektromotorischer Antrieb.

Die Schieberelemente 232 bilden jeweils oberhalb des Transportbandes 206 eine Abdeckung, durch die ein Nachrutschen von Schüttgut in den Bereich des Transportbandes 206 verhindert werden kann. Somit ist durch ein Hineinschieben oder ein Herausziehen der Schieberelemente 232 aus dem Bereich zwischen den Staurostelementen 231 eine gezielte Steuerung möglich, in welchen Bereichen Schüttgut aus dem Schüttgutbehälter gefördert werden soll. Somit kann vorteilhaft eine homogene Austragung des Schüttgutes gezielt gesteuert werden. Die Steuerung der Schieberelemente erfolgt dabei angepasst an die jeweilige Geometrie des Schüttgutbehälters und das Fließverhalten des Schüttguts, vorzugsweise über eine speicherprogrammierbare Steuerung (SPS). Es versteht sich, dass die Steuerung der Schieberelemente 232 eine Regelung umfassen kann, wozu insbesondere Sensoren vorgesehen sein können, die als Eingangssignal für die Regelung in verschiedenen Bereichen des Schüttgutbehälters Füllhöhe, Geschwindigkeit, Temperatur, Dichte, Gewicht oder andere chemische oder physikalische, insbesondere optische, Eigenschaften des Schüttguts erfassen. Vorstehend wurde die Erfindung beispielhaft unter Bezugnahme auf drei bevorzugte Ausführungsbeispiele erläutert, bei denen insbesondere die Greifwerkzeuge und Stemmwerkzeuge jeweils getrennte Baueinheiten sind. Es versteht sich, dass Stemmwerkzeuge und Greifwerkzeuge auch einteilig ausgebildet sein können. Es versteht sich ferner, dass die Stemmwerkzeuge und Greifwerkzeuge jeweils eine von den beschriebenen Formen abweichende, an die jeweilige konkrete Aufgabenstellung angepasste Form aufweisen können.

## Patentansprüche

1. Bandfördervorrichtung zum Austragen von Schüttgut (7) aus einem Schüttgutbehälter (2), umfassend
ein bewegbares Transportband (6; 108; 206) zur Aufnahme des auszutragenden Schüttguts (7),
wobei das bewegbare Transportband (6; 106; 206) außerhalb eines von dem Schüttgutbehälter (2) umfassten Volumens angeordnet ist,
wobei an dem Transportband (6; 106; 206) wenigstens ein gemeinsam mit dem Transportband (6; 106; 206) bewegbares Greifwerkzeug (17; 117; 217) angeordnet ist,
**dadurch gekennzeichnet,**
**dass** dem Transportband (6; 106; 206) wenigstens ein gemeinsam mit dem Transportband (6; 106; 206) bewegbares Stemmwerkzeug (20; 120; 220) zugeordnet ist.

2. Bandfördervorrichtung nach Anspruch 1, **dadurch gekennzeichnet, dass** das Greifwerkzeug (17; 117; 217) und/oder das Stemmwerkzeug (20; 120; 220) im wesentlichen eine Erstreckung in einer zu der Bewegungsrichtung (15) des Transportbandes (6; 106; 206) senkrecht verlaufenden Ebene aufweist.

3. Bandfördervorrichtung nach Anspruch 1 oder 2, **dadurch gekennzeichnet, dass** die Bandfördervorrichtung (1) wenigstens zwei Greifwerkzeuge (17; 117; 217) umfasst, wobei die wenigstens zwei Greifwerkzeuge (17; 117; 217) beabstandet zueinander angeordnet sind.

4. Bandfördervorrichtung nach einem der Ansprüche 1 bis 3, **dadurch gekennzeichnet, dass** das Greifwerkzeug (17; 117; 217) und/oder das Stemmwerkzeug (20; 120; 220) an dem Transportband (6; 106; 206) lösbar festlegbar ist.

5. Bandfördervorrichtung nach einem der Ansprüche 1 bis 4, **dadurch gekennzeichnet, dass** das Greifwerkzeug (17; 117; 217) und/oder das Stemmwerkzeug (20; 120; 220) in das von dem Schüttgutbehälter (2) umfasste Volumen eingreift.

6. Bandfördervorrichtung nach einem der Ansprüche 1 bis 5, **dadurch gekennzeichnet, dass** wenigstens ein Stemmwerkzeug (20; 120; 220) an wenigstens einem Greifwerkzeug (17; 117; 217) angeordnet ist.

7. Bandfördervorrichtung nach Anspruch 6, **dadurch gekennzeichnet, dass** das wenigstens eine Stemmwerkzeug (20; 120; 220) an dem wenigstens einen Greifwerkzeug (17; 117; 217) lösbar festlegbar ist.

8. Bandfördervorrichtung nach einem der Ansprüche 1 bis 7, **dadurch gekennzeichnet, dass** das Transportband (6; 106; 206) in zwei entgegengesetzte Bewegungsrichtungen (15) antreibbar bewegbar ist.

9. Anordnung, umfassend wenigstens einen Schüttgutbehälter (2) und eine Bandfördervorrichtung nach einem der Ansprüche 1 bis 8 zum Austragen von Schüttgut aus dem Schüttgutbehälter (2).

10. Anordnung nach Anspruch 9, **dadurch gekennzeichnet, dass** dem wenigstens einen Schüttgutbehälter (2) wenigstens ein verschließbares Sperrorgan (232) zugeordnet ist, und dass das Sperrorgan (232) mit Antriebsmitteln verbunden ist, die das Sperrorgan (232) zwischen einer geschlossenen Position und einer geöffneten Position des Schüttgutbehälters verfahren können.

11. Anordnung nach Anspruch 10, **dadurch gekennzeichnet, dass** eine Öffnungsbewegung des Sperrorgans (232) in Abhängigkeit von der Bewegung des Transportbands (208) und/oder Parametern des Gießereisands und/oder der Beladung des Schüttgutbehälters (2) steuerbar ist.

12. Anordnung nach einem der Ansprüche 9 bis 11, **dadurch gekennzeichnet, dass** die Bandfördervorrichtung (1) unterhalb wenigstens eines Schüttgubehälters (2) aufgehangen ist.

13. Verfahren zum Fördern von regeneriertem Formsand (7) aus einem Schüttgutbehälter (2), bei dem der Sand (7) aus dem Schüttgutbehälter(2) von einem unterhalb einer Öffnung (4) des Schüttgutbehälters (2) umlaufenden Transportband (6; 106; 206) abgefördert wird,
wobei der Sand (7) in einem ersten Bereich des Transportbands (6; 106; 206) durch reibenden Kontakt mit dem Transportband (6; 106; 206) in Transportrichtung befördert wird,
wobei der Sand (7) in einem zweiten Bereich des Transportbands (6; 106; 206) von einem von dem Transportband (6; 106; 206) nach oben vorstehenden Greifwerkzeug (17; 117; 217) aufgenommen und in dem Bereich des Transportbands (6; 106; 206) gehalten wird,
**dadurch gekennzeichnet,**
**dass** der Sand (7) von wenigstens einem Sand über das zu dem Transportband zugeordneten Greifwerkzeug (17; 117; 217) hinaus in den Sand (7) eindringenden Stemmwerkzeug (20; 120; 220) aufgelockert wird.

14. Verfahren nach Anspruch 13, **dadurch gekennzeichnet, dass** Mittel zum Erfassen von Schüftgutparametern wie dem Füllstand des Schüttgutbehälters (2) und/oder der Temperatur oder der Verweilzeit des Sands (7) in dem Schüttgutbehälter (2) vorgesehen sind, und dass das Transportband (6; 106; 206) in Abhängigkeit von den erfassten Schüttgutparametern angetrieben wird.

15. Verfahren nach Anspruch 14, **dadurch gekennzeichnet, dass** Sperrorgane (232) in Abhängigkeit von den erfassten Schüttgutparametern derart betätigt werden, dass ein Austrag von Sand (7) aus Bereichen mit hohem Füllstand und/oder hoher Verweilzeit erfolgt.

## Claims

1. Belt conveyor device for discharging bulk material (7) from a bulk material container (2), comprising
a movable transport belt (6; 106; 206) for receiving the bulk material (7) to be discharged,
wherein the movable transport belt (6; 106; 206) is arranged outside a volume encompassed by the bulk material container (2),
wherein at least one gripping tool (17; 117; 217) which is movable together with the transport belt (6; 106; 206) is arranged on the transport belt (6; 106; 206),
**characterized in**
**that** the transport belt (6; 106; 206) is assigned at least one caulking tool (20; 120; 220) which is movable together with the transport belt (6; 106; 206).

2. Belt conveyor device according to Claim 1, **characterized in that** the gripping tool (17; 117; 217) and/or the caulking tool (20; 120; 220) substantially have/has an extent in a plane running perpendicularly to the direction of movement (15) of the transport belt (6; 106; 206).

3. Belt conveyor device according to Claim 1 or 2, **characterized in that** the belt conveyor device (1) comprises at least two gripping tools (17; 117; 217), the at least two gripping tools (17; 117; 217) being arranged spaced apart from each other.

4. Belt conveyor device according to one of Claims 1 to 3, **characterized in that** the gripping tool (17; 117; 217) and/or the caulking tool (20; 120; 220) can be fixed releasably to the transport belt (6; 106; 206).

5. Belt conveyor device according to one of Claims 1 to 4, **characterized in that** the gripping tool (17; 117; 217) and/or the caulking tool (20; 120; 220) engage/engages in the volume encompassed by the bulk material container (2).

6. Belt conveyor device according to one of Claims 1 to 5, **characterized in that** at least one caulking tool (20; 120; 220) is arranged on at least one gripping tool (17; 117; 217).

7. Belt conveyor device according to Claim 6, **characterized in that** the at least one caulking tool (20; 120; 220) can be fixed releasably to the at least one gripping tool (17; 117; 217).

8. Belt conveyor device according to one of Claims 1 to 7, **characterized in that** the transport belt (6; 106; 206) can be moved in a manner such that it is drivable in two opposite directions of movement (15).

9. Arrangement comprising at least one bulk material container (2) and a belt conveyor device according to one of Claims 1 to 8 for discharging bulk material from the bulk material container (2).

10. Arrangement according to Claim 9, **characterized in that** the at least one bulk material container (2) is assigned at least one closable blocking member (232), and that the blocking member (232) is connected to driving means which can move the blocking member (232) between a closed position and an open position of the bulk material container.

11. Arrangement according to Claim 10, **characterized in that** an opening movement of the blocking member (232) is controllable in dependence on the movement of the transport belt (206) and/or parameters of the foundry sand and/or the loading of the bulk material container (2).

12. Arrangement according to one of Claims 9 to 11, **characterized in that** the belt conveyor device (1) is mounted below at least one bulk material container (2).

13. Method for conveying regenerated moulding sand (7) from a bulk material container (2), in which the sand (7) is conveyed away from the bulk material container (2) by a transport belt (6; 106; 206) revolving below an opening (4) in the bulk material container (2),
wherein the sand (7) is conveyed in the transport direction in a first region of the transport belt (6; 106; 206) by rubbing contact with the transport belt (6; 106; 206),
wherein the sand (7) is picked up by a gripping tool (17; 117; 217) protruding upwards from the transport belt (6; 106; 206) and is retained in the region of the transport belt (6; 106; 206),
**characterized in**
**that** the sand (7) is loosened by at least one caulking tool (20; 120; 220) penetrating into the sand (7) beyond the gripping tool (17; 117; 217) arranged on the transport belt.

14. Arrangement according to Claim 13, **characterized in that** means for detecting bulk material parameters, such as the filling level of the bulk material container (2) and/or the temperature or the residence time of the sand (7) in the bulk material container (2) are provided, and that the transport belt (6; 106; 206) is driven in dependence on the detected bulk material parameters.

15. Method according to Claim 14, **characterized in that** blocking members (232) are actuated in dependence on the detected bulk material parameters such that sand (7) is discharged from regions having a high filling level and/or long residence time.

## Revendications

1. Transporteur à courroie pour l'évacuation de produit en vrac (7) d'un contenant de produit en vrac (2), comprenant
une bande transporteuse mobile (6 ; 106 ; 206) destinée à recevoir le produit en vrac à évacuer (7),
la bande transporteuse mobile (6 ; 106 ; 206) étant disposée en dehors d'un volume circonscrit par le contenant de produit en vrac (2),
étant disposé au niveau de la bande transporteuse (6 ; 106 ; 206) au moins un outil de préhension (17 ; 117 ; 217) mobile en même temps que la bande transporteuse (6 ; 106 ; 206),
**caractérisé en ce**
**qu'**au moins un outil de pressage (20 ; 120 ; 220) mobile en même temps que la bande transporteuse (6 ; 106 ; 206) est attribué à la bande transporteuse (6, 106, 206).

2. Transporteur à courroie selon la revendication 1, **caractérisé en ce que** l'outil de préhension (17 ; 117 ; 217) et/ou l'outil de pressage (20 ; 120 ; 220) présente(nt) substantiellement une extension orientée dans un plan s'étendant perpendiculairement au sens de mouvement (15) de la bande transporteuse (6 ; 106 ; 206).

3. Transporteur à courroie selon la revendication 1 ou 2, **caractérisé en ce que** le transporteur à courroie (1) comprend au moins deux outils de préhension (17 ; 117 ; 217), les au moins deux outils de préhension (17 ; 117 ; 217) étant disposés espacés l'un de l'autre.

4. Transporteur à courroie selon l'une quelconque des revendications 1 à 3, **caractérisé en ce que** l'outil de préhension (17 ; 117 ; 217) et/ou l'outil de pressage (20 ; 120 ; 220) peu(ven)t être fixé(s) à la bande transporteuse (6 ; 106 ; 206) de manière amovible.

5. Transporteur à courroie selon l'une quelconque des revendications 1 à 4, **caractérisé en ce que** l'outil de préhension (17 ; 117 ; 217) et/ou l'outil de pressage (20 ; 120 ; 220) s'engrène dans le volume circonscrit par le contenant de produit en vrac (2).

6. Transporteur à courroie selon l'une quelconque des revendications 1 à 5, **caractérisé en ce qu'**au moins un outil de pressage (20 ; 120 ; 220) est disposé au niveau d'au moins un outil de préhension (17 ; 117 ; 217).

7. Transporteur à courroie selon la revendication 6, **caractérisé en ce que** l'au moins un outil de pressage (20 ; 120 ; 220) peut être fixé de manière amovible à l'au moins un outil de préhension (17 ; 117 ; 217).

8. Transporteur à courroie selon l'une quelconque des revendications 1 à 7, **caractérisé en ce que** la bande transporteuse (6 ; 106 ; 206) peut être entraînée en mouvement dans deux sens de mouvement opposés (15).

9. Dispositif comprenant au moins un contenant de produit en vrac (2) et un transporteur à courroie selon l'une quelconque des revendications 1 à 8 pour évacuer du produit en vrac du contenant de produit en vrac (2).

10. Dispositif selon la revendication 9, **caractérisé en ce qu'**à l'au moins un contenant de produit en vrac (2) est associé au moins un organe de blocage fermant (232) et **en ce que** l'organe de blocage (232) est raccordé à des moyens de propulsion qui peuvent déplacer l'organe de blocage (232) entre une position fermée et une position ouverte du contenant de produit en vrac.

11. Dispositif selon la revendication 10, **caractérisé en ce qu'**un mouvement d'ouverture de l'organe de blocage (232) est contrôlable en fonction du mouvement de la bande transporteuse (206) et/ou de paramètres du sable de fonderie et/ou du chargement du contenant de produit en vrac (2).

12. Dispositif selon l'une quelconque des revendications 9 à 11, **caractérisé en ce que** le transporteur à courroie (1) est suspendu en dessous d'au moins un contenant de produit en vrac (2).

13. Procédé de transport de sable de moulage régénéré (7) depuis un contenant de produit en vrac (2), dans lequel le sable (7) est évacué du contenant de produit en vrac (2) par une bande transporteuse (6 ; 106 ; 206) en rotation en dessous d'une ouverture (4) du contenant de produit en vrac (2),
le sable (7) étant transporté dans une première zone de la bande transporteuse (6 ; 106 ; 206) par contact de frottement avec la bande transporteuse (6 ; 106 ; 206) dans le sens de transport,
le sable (7) étant prélevé dans une seconde zone de la bande transporteuse (6 ; 106 ; 206) par un outil de préhension (17 ; 117 ; 217) en saillie vers le haut hors de la bande transporteuse (6 ; 106 ; 206) et maintenu au niveau de la bande transporteuse (6 ; 106 ; 206),
**caractérisé en ce**
**que** le sable (7) est ameublé par au moins un outil de pressage (20 ; 120 ; 220) rentrant dans le sable (7) au delà de l'outil de préhension (17 ; 117 ; 217) disposé au niveau de la bande transporteuse.

14. Procédé selon la revendication 13, **caractérisé en ce qu'**il est prévu des moyens de détection de paramètres du produit en vrac comme le niveau de remplissage du contenant de produit en vrac (2) et/ou de la température ou de la durée de séjour du sable (7) dans le contenant de produit en vrac (2) et **en ce que** la bande transporteuse (6 ; 106 ; 206) est entraînée en fonction des paramètres du produit en vrac détectés.

15. Procédé selon la revendication 14, **caractérisé en ce que** des organes de blocage (232) sont actionnés en fonction des paramètres du produit en vrac détectés de manière à ce qu'il y ait une évacuation de sable (7) hors de zones à niveau de remplissage élevé et/ou à longue durée de séjour.
